# EUROPEAN PATENT APPLICATION

(11) **EP 3 979 245 A1**
(43) Date of publication of application: **06.04.2022**
(21) Application number: 20199425.8
(22) Date of filing: 30.09.2020
(51) Int. Cl.: G11B 27/11

(54) **SYSTEM AND METHOD FOR PROVIDING INTERACTIVE STORYTELLING**

(71) Applicant: Al Sports Coach GmbH, 76532 Baden-Baden (DE)
(72) Inventor: PETERSEN, Lorenz, 67480 Roeschwoog (FR); SEYFRIED, Mike, 70567 Stuttgart (DE)
(74) Representative: Ullrich & Naumann PartG mbB

(57) **Abstract**

A System for providing interactive storytelling is disclosed, comprising:
an output device (2) configured to output storytelling content to a user (9), wherein the storytelling content includes one or more of audio data and visual data,
a playback controller (3) configured to provide storytelling content to the output device (2),
one or more sensors (4, 5) configured to generate measurement data by capturing an action of the user (9),
an abstraction device (6) configured to generate extracted characteristics (22) by analyzing the measurement data,
an action recognition device (7) configured to determine a recognized action by analyzing the time behavior of the measurement data and/or the extracted characteristics (22),
wherein the playback controller (3) is additionally configured to interrupt provision of storytelling content, to trigger the abstraction device (6) and/or the action recognition device (7) to determine a recognized action, and to continue provision of storytelling content based on the recognized action.

Additionally, an according method, a computer program product and a computer-readable storage medium are disclosed.

## Description

The present invention relates to systems and methods for providing interactive storytelling.

In recent decades, audio books gained more and more popularity. Audio books are recordings of a book or other text being read aloud. In most cases, the narrator is an actor/actress and the text refers to fictional stories. Generally, the actual storytelling is accompanied by sounds, noises, music, etc., so that a listener can dive deeper into the story. In early times, audiobooks were delivered on audio media, like disk records, cassette tapes or compact disks. Starting in the late 1990s, audiobooks were published as downloadable content played back by a music player or a dedicated audiobook app. Sometimes, audiobooks are enhanced with pictures, video sequences and other storytelling content. Audiobooks with visual content are particularly popular with children.

Typically, a system for providing storytelling comprises a playback controller and an output device. The playback controller loads analog or digital data from a medium (e.g. a cassette tape, a compact disk or a memory) or from the Internet (or another network) and provides the storytelling content to the output device. The output device outputs the storytelling content to the user. The output device and the storytelling content are generally adapted to each other. If the storytelling content comprises only audio data, the output device can be a simple loudspeaker or another sound generator. If the storytelling content comprises visual data, the output device can have according visual output capabilities. In this case, the output device may comprise a video display.

Although involvement of a user into the storytelling has been improved considerably, the systems known in the art provide limited capabilities. In many cases, interaction with users is limited to pressing bottoms, like "play", "pause", and "stop". Interactive storytelling is not possible. However, a deeper user involvement is desirable. It would be a great step forward, if a user can influence the storytelling to a certain extend.

It is an object of the present disclosure to improve and further develop a system and a method for providing storytelling, which provides an improved interaction with the user.

According to the disclosure, the aforementioned object is accomplished by a system comprising the features of claim 1. According to this claim, the system comprises:
an output device configured to output storytelling content to a user, wherein the storytelling content includes one or more of audio data and visual data,
a playback controller configured to provide storytelling content to the output device,
one or more sensors configured to generate measurement data by capturing an action of the user,
an abstraction device configured to generate extracted characteristics by analyzing the measurement data,
an action recognition device configured to determine a recognized action by analyzing the time behavior of the measurement data and/or the extracted characteristics,
wherein the playback controller is additionally configured to interrupt provision of storytelling content, to trigger the abstraction device and/or the action recognition device to determine a recognized action, and to continue provision of storytelling content based on the recognized action.

Furthermore, the aforementioned object is accomplished by a method comprising the features of claim 13. According to this claim, the method comprises:
providing, by a playback controller, storytelling content to an output device, wherein the storytelling content includes one or more of audio data and visual data,
outputting, by the output device, the storytelling content to a user,
interrupting provision of storytelling content,
capturing, by one or more sensors, an action of the user, thereby generating measurement data,
analyzing the measurement data by an abstraction device, thereby generating extracted characteristics,
analyzing, by an action recognition device, the time behavior of the measurement data and/or the extracted characteristics, thereby determining a recognized action, and
continuing provision of storytelling content based on the recognized action.

Furthermore, the aforementioned object is accomplished by a computer program product and a computer-readable storage medium comprising executable instructions which, when executed by a hardware processor, cause the hardware processor to execute a method for providing interactive story telling.

It has been recognized that interaction with a user can be improved considerably, if the user is encouraged to perform an action. If this action is additionally linked with the storytelling content provided by the system, the user is involved into the narrated story and can gain a more active role. Interactive storytelling becomes possible. Particularly, if the storytelling content is made for children, the children's need of movement can be combined with intriguing stories. For enabling one or several of these or other aspects, the system may have the capability to monitor a user and to recognize an action performed by the user. To this end, the system comprises not only a playback controller and an output device, but also one or more sensors, an abstraction device and an action recognition device.

The playback controller is configured to provide storytelling content to the output device. This "storytelling content" may comprise anything that can be used at telling a story. It may comprise just one type of content or may combine various types of content. In one embodiment, the storytelling content comprises audio data, e.g. recordings of a narrator, who reads a text, including music and noises associated with the read text. In another embodiment, the storytelling content comprises visual data, e.g. pictures, drawings or videos. In yet another embodiment, the storytelling content comprises audio data and visual data, which preferably complement each other, e.g. audio recording of a narrator reading a text and visualization/s of the narrated text. In one embodiment, the storytelling content is part of an audiobook or a videobook. The storytelling content may be provided as analog data, digital data, or a combination of analog and digital data. This short list of examples and embodiments shows the diversity of the "storytelling content".

The output device receives the storytelling content from the playback controller and outputs it to the user. The output device converts the received storytelling content into signals that can be sensed by the user. These signals can include acoustic waves, light waves, vibrations and/or the like. In this way, the user can consume the storytelling content and follow the storytelling. When outputting the storytelling content to the user, the output device may convert and/or decode the storytelling content. For instance, if the storytelling content is provided as compressed data, the output device may decompress the data and generate data suitable for outputting them to the user. Required techniques and functionalities are well known in the art.

The sensor/s is/are configured to generate measurement data by capturing an action of the user. This means that the sensor/s and the captured action may be adapted to each other. The term "action" refers to various things that a person can do and that can be captured by a sensor. According to one embodiment, an "action" refers to a movement of the user. This movement may relate to a body part, e.g. nodding with the head, pointing with a finger, raising an arm, or shaking a leg, or to a combination of movements, e.g. the movements a person would do when climbing a ladder or a tree or when jumping like a frog. The "action" might also comprise that the user does not move for a certain time. According to another embodiment, an "action" refers to an utterance of the user, e.g. saying a word, singing a melody, clapping with the hands, or making noises like a duck. These examples are just provided for showing the broad scope of the term "action" and should not be regarded as limiting the scope of this disclosure.

Additionally, the sensor/s and the user may be placed in such a way that the sensor/s is/are capable of capturing the user's action. As most sensors have a specific measurement range, this can mean that the user has to move into the measurement range of the sensor or that the sensor has to be positioned so that the user is within the measurement range. If the relative positioning is correct, the sensor can capture an action of the user and generate measurement data that are representative for the action performed by the user.

The measurement data can be provided in various forms. It can comprise analog or digital data. It can comprise raw data of the sensor. However, the measurement data may also comprise processed data, e.g. a compressed picture or a band pass filtered audio signal or an orientation vector determined by a gravity sensor.

The measurement data is input to the abstraction device that analyzes the input measurement data. Analyzing the measurement data is directed to the extraction of characteristics of the measurement data, i.e. generation of extracted characteristics. The "characteristics" can refer to various things, which characterize the analyzed measurement data in a specific way. If the measurement data comprises a picture of a user, the characteristics can refer to a model of the user or of parts of the user. If the measurement data comprises an utterance of a user, the characteristics can refer to a tone pitch, a frequency spectrum or a loudness level.

The measurement data and/or the extracted characteristics are input to an action recognition device that analyze the time behavior of the measurement data and/or of the extracted characteristics. The time behavior describes how the analyzed object changes over the time. By analyzing the time behavior, it is possible to discern the performed action. At the previous example of the extracted characteristics being a model of the user, the time behavior of extracted characteristics may describe how the model of the user changes over time. As the model describes the user, the time behavior of the extracted characteristics describes how the user's position, posture, etc. change. The detected change can be associated to a performed action. The recognition of actions based on other measurement data and/or other extracted characteristics is quite similar, as will be apparent for those skilled in the art.

For using a recognized action, the playback controller is additionally configured to interrupt provision of storytelling content, to trigger the abstraction device and the action recognition device to determine a recognized action, and to continue provision of storytelling content based on the recognized action. According to one development, the recognized action might also comprise "no action detected" or "no suitable action detected". In this case, the playback controller might ask the user to repeat the performed action.

According to one embodiment, these steps are performed in the mentioned order. I.e. after interrupting provision of storytelling content to the output device, the playback controller triggers the abstraction device and the action recognition device to determine and recognized action. As soon as an action is recognized, the playback device will continue provision of the storytelling content. Continued provision of the storytelling content can reflect the recognized action. In this embodiment, interrupting provision of storytelling content might be triggered by reaching a particular point of the storytelling content. The storytelling content might be subdivided in storytelling phrases, after which an interrupting event is located, respectively. In this case, the playback controller would provide a storytelling phrase (as part of the storytelling content). When reaching the end of this storytelling phrase, the playback controller would trigger the abstraction and action recognition devices to determine a recognized action. When an action is recognized, the playback controller would continue provision of the next storytelling phrase. The "next storytelling phrase" might be the logically next phase in the storytelling, i.e. the storytelling continues in a linear way. However, there might also be a non-linear storytelling, for example, if the user does not react and should be encouraged to perform an action.

According to another embodiment, the playback device controller triggers the abstraction device and the action recognition device to determine a recognized action. Additionally, the playback controller provides storytelling content to the output device. As soon as an action is recognized, the playback controller might interrupt provision of the storytelling content, might change the provided storytelling content, and might continue provision of the storytelling content, namely with the changed storytelling content. The change of the storytelling content might be based on the recognized action.

The abstraction device, the action recognition device and the playback controller can be implemented in various ways. They can be implemented by hardware, by software, or by a combination of hardware and software.

According to one embodiment, the system and its components are implemented on or using a mobile device. Generally, mobile devices have restricted resources and they can be formed by various devices. Just to provide a couple of examples without limiting the scope of protection of the present disclosure, such a mobile device might be formed by a tablet computer, a smart phone, a netbook, or a smartphone. Such a mobile device may comprises a hardware processor, RAM (Random Access Memory), non-volatile memory (e.g. flash memory), an interface for accessing a network (e.g. WiFi, LTE (Long Term Evolution), UMTS (Universal Mobile Telecommunications System), or Ethernet), an input device (e.g. a keyboard, a mouse, or a touch sensitive surface), a sound generator, and a display. Additionally, the mobile device may comprise a camera and a microphone. The sound generator and the display may function as an output device according to the present disclosure, the camera and the microphone may function as sensors according to the present disclosure.

In some embodiments, the system comprises a comparator configured to determine a comparison result by comparing the recognized action with a predetermined action, wherein the comparison result is input to the playback controller. To this end, the comparator can be connected to the action recognition device and to a memory storing a representation of the predetermined action. The action recognition device inputs the recognized action to the comparator; the memory provides the predetermined action to the comparator. The comparator can determine the comparison result in various ways, generally depending on the representation of the recognized action and the predetermined action. According to one embodiment, the comparator is implemented as a classifier, such as a support vector machine or a neural network. In this case, the comparison result is the classification result of the recognized action.

In some embodiments, the system comprises a cache memory configured to store measurement data and/or extracted characteristics preferably for a predetermined time, wherein the action recognition device may use the measurement data and/or extracted characteristics stored in the cache memory when analyzing their respective time behavior. The sensors may input measurement data into the cache memory and/or the abstraction device may input extracted characteristics into the cache memory. The predetermined time can be based on the time span required for analyzing the time behavior. For instance, if the action recognition device analyses data of the two most recent seconds, the predetermined time might be selected to a time higher than this value, e.g. 3 seconds. The predetermined time might also be a multiple of this time span, in this example for instance three times the time span of two seconds. The cache memory might be organized as a ring memory, overwriting the oldest data with the most recent data.

The sensors, which can be used in connection with the present disclosure, can be formed by various sensors. The sensors have to be able to capture an action of the user. However, this requirement can be fulfilled by various sensors. In some embodiments, the one or more sensors may comprise one or more of a camera, a microphone, a gravity sensor, an acceleration sensor, a pressure sensor, a light intensity sensor, a magnetic field sensor, and the like. If the system comprises several sensors, the measurement data of the sensors can be used in different ways. In some embodiments, the measurement data of several sensors might be used according to the anticipated action to be captured. For instance, if the system comprises a microphone and a camera and if it is anticipated that the user whistles a melody, the measurement data of the microphone can be used. If the user should simulate climbing up a ladder, the measurement data of the camera can be used. In some embodiments, the measurement data of several sensors can be fused, i.e. the measurement data are combined with each other. For instance, if the user should clap his/her hands, the measurement data of the camera can be used for discerning the movement of the hands and the measurement data of the microphone can be used for discerning the clapping noise.

Depending on the sensor/s, the measurement data and the extracted characteristics can have a different meaning. In the context of the present disclosure, a person skilled in the art will be able to understand the respective meanings.

In some embodiments, the one or more sensor may comprise a microphone, the measurement data may comprise audio recordings, and the extracted characteristics may comprise one or more of a melody, a noise, a sound, a tone and the like. In this way, the system can discern utterances of the user.

In some embodiments, the one or more sensor may comprise a camera, the measurement data may comprise pictures generated by the camera, and the extracted characteristics may comprise a model of the user or a model of a part of the user. The pictures may comprise single pictures or sequences of pictures forming a video. In this way, the system can discern movements of the user or of parts of the user.

In some embodiments, the abstraction device and/or the action recognition device may comprise a Neural Network. A Neural Network is based on a collection of connected units or nodes (artificial neurons), which loosely model the neurons in a biological brain. Each connection can transmit a signal to other neurons. An artificial neuron that receives a signal processes it and can signal neurons connected to it. Typically, neurons are aggregated into layers. Signals travel from the first layer (the input layer), to the last layer (the output layer), possibly after traversing the layers multiple times. After defining a rough topology and setting initial parameters of the neurons, Neural Networks learn by processing examples with known inputs and known outputs, respectively. During this training phase, parameters of the neurons are adapted, neurons may be added/removed and/or connections between neurons may be added/deleted. During an inference phase, the results of the training is used for determining the output of an unknown input. Theoretically, many different types of Neural Networks can be used in connection with the present disclosure. In some embodiments, CNN - Convolutional Neural Network - and/or LTSM - Long Short Term Memory - and/or Transformer Networks are used.

The training of such a Neural Network can be done in various ways, as long as the trained Neural Network is capable of analyzing the input data reliably. In some embodiments, the Neural Networks are trained using a training optimizer. This training optimizer may be built on the principle of fitness criterion by optimizing an objective function. According to one embodiment, this optimization is gradient descent as it is applied in an Adam optimizer. An Adam optimizer is based on a method for first-order gradient-based optimization of stochastic objective functions based on adaptive estimates of lower-order moments. It is described in D. Kingma, J. Ba: "ADAM: A Method for Stochastic Optimization", conference paper at ICLR 2015, https://arxiv.org/pdf/1412.6980.pdf.

In some embodiments, a data optimizer is connected between the abstraction device and the action recognition device. According to one development, the data optimizer may be part of the abstraction device. This data optimizer may further process data output by the abstraction device. This further processing may comprise improvement of quality of the data output by the abstraction device, and, therefore, improvement of the quality of the extracted characteristics. For instance, if the abstraction device outputs skeleton poses as characteristics, the data optimizer may be a pose optimizer. The data optimizer may be based on various techniques. In some embodiments, the data optimizer is based on energy minimization techniques. According to one development, the data optimizer is based on a Gauß-Newton algorithm. The Gauβ-Newton algorithm is used to solve non-linear least square problems. Particularly, when localizing nodes of a model of user in a picture, the Gauß-Newton algorithm can reduce computing time considerably. This is particularly beneficial, if the system is executed on a mobile device.

In some embodiments, the system additionally comprises a memory storing data supporting the playback device at providing storytelling content. This memory might be a non-volatile memory, such as a flash memory. The memory can be used for caching data load from a network, e.g. the Internet. The playback device can be configured to load data stored in the memory and to use the loaded data when providing storytelling content. In one embodiment, this "using of loaded data" may comprise outputting the loaded data to the output device as storytelling content. In another embodiment, this "using of loaded data" may comprise adapting loaded data to the recognized action. Adapting loaded data may be performed using artificial intelligence.

The system may comprise various output devices. An output device can be used in the system of the present disclosure, if it is capable of participating in outputting storytelling content to the user. As the storytelling content can address each sense of a user, many output devices can be used in connection with the present disclosure. In some embodiments, the output device comprise one or more of a display, a sound generator, a vibration generator, an optical indicator, and the like.

As already mentioned the system and its components can be implemented on or using a mobile device. In some embodiments, the system is optimized for being executed on a mobile device, preferably a smartphone or a tablet.

There are several ways how to design and further develop the teaching of the present invention in an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing
- Fig. 1: shows a block diagram of an embodiment of a system according to the present disclosure,
- Fig. 2: shows a flow diagram of an embodiment of a method according to the present disclosure, and
- Fig. 3: a picture of a user of the system with an overlaid model of the user.

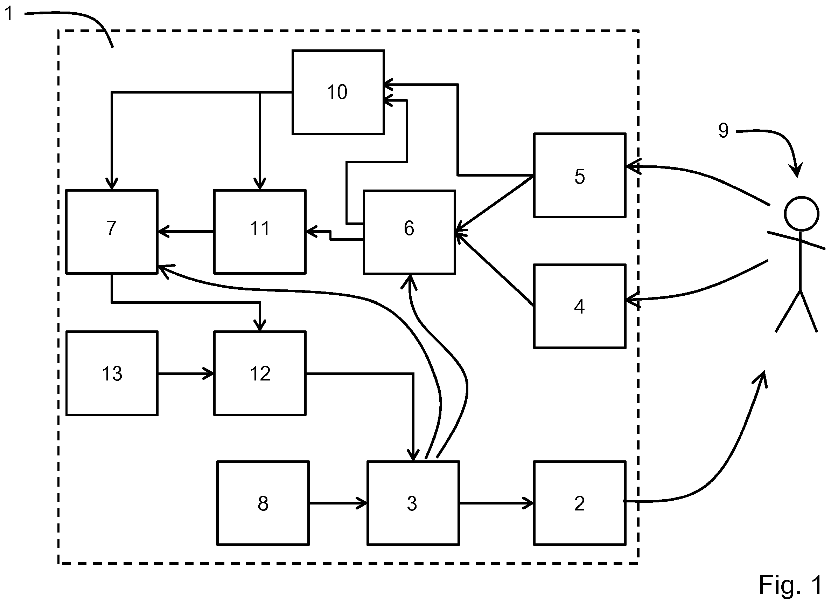

Fig. 1 shows a block diagram of an embodiment of a system 1 according to the present disclosure. The system 1 is implemented on a smartphone and comprises an output device 2, a playback controller 3, two sensors 4, 5, an abstraction device 6, and an action recognition device 7. The playback controller 3 is connected to a memory 8, which stores data used at providing storytelling content. In this example, memory 8 stores storytelling phrases, i.e. bits of storytelling content, after which an action is anticipated, respectively. The storytelling phrases may be a couple of 10 seconds long, e.g. 20 to 90 seconds. The playback controller 3 loads data from memory 8 and uses the loaded data at providing storytelling content to the output device 2. The storytelling content comprises audio and visual data, in this case a recording of a narrator reading a text, sounds, music, and pictures (or videos) illustrating the read text. To this end, the output device comprises a loudspeaker and a video display. The output device outputs the storytelling content to a user 9.

At the end of a storytelling phrase, the playback controller triggers the abstraction device 6 and the action recognition device 7 (indicated with two arrows) and the user 9 is asked to perform a particular action, e.g. stretching high to reach a kitten in a tree, climbing up a ladder, making a meow sound, singing a calming song for the kitten, etc. It is also possible, that the playback controller triggers the abstraction device 6 and the action recognition device 7 while or before outputting a storytelling phrase to the output device 2. By continuously monitoring the user 9, the system can react more directly to an action performed by the user. The system can even react on unexpected action, e.g. by outputting "Why are you waving at me all time?"

The sensors 4, 5 are configured to capture the action performed by the user. Sensor 4 is the camera of the smartphone and sensor 5 the microphone of the smartphone. Measurement data generated by the sensors 4, 5 while capturing the action of the user are input to a cache memory 10 and to the abstraction device 6. The abstraction device 6 analysis received measurement data and extracts characteristics of the measurement data. The extracted characteristics are input to the cache memory 10 and to the action recognition device 7. The cache memory 10 stores received measurement data and received extracted characteristics. In order to support analyzing of the time behavior, the cache memory 10 may store the received data at predetermined periods or together with a time stamp.

A data optimizer 11 is connected between the abstraction device 6 and the action recognition device 7. The data optimizer 11 is based on a Gauß-Newton algorithm. Depending on the anticipated action captured by the sensors 4, 5, the action recognition device 7 can access the data stored in the cache memory 10 and/or data optimized by data optimizer 11. This optimized data might be provided via the cache memory 10 or via the abstraction device 6. The action recognition device 7 analyzes the time behavior of the extracted characteristics and/or the time behavior of the measurement data in order to determine a recognized action. The recognized action is input to a comparator 12, which classifies the recognized action based on an anticipated action stored in an action memory 13. If the recognized action is similar to the anticipated action, the comparison result is input to the playback controller 3. The playback controller will provide storytelling content considering the comparison result.

The abstraction device 6 and the action recognition device 7 can be implemented using a Neural Network. An implementation of the system using a CNN - Convolutional Neural Network - or a LTSM - Long Short Term Memory - produced good results. It should be noted that the following examples just show Neural Networks that have proven to provide good results. However, it should be understood that the present disclosure is not limited to these specific Neural Networks.

Regarding the abstraction device 6 and with reference to analyzing measurement data of a camera, i.e. pictures, the Neural Network is trained to mark a skeleton of a person in a picture. This skeleton forms characteristics according to the present disclosure and a model of the user. The Neural Network learns associating an input picture with multiple output feature maps or pictures. Each keypoint is associated with a picture with values in the range [0..1] at the position of the keypoint (for example eyes, nose, shoulders, etc) and 0 everywhere else. Each body part (eg upper arm, lower arm) is associated with a colored picture encoding its location (brightness) and its direction (colors) in a so-called PAF - Part Affinity Field. These output feature maps are used to detect and localize a person and determine its skeleton pose. The basic concept of such a skeleton extraction is disclosed in Z. Cao: "Realtime Multi-Person 2D Pose Estimation using Part Affinity Fields", CVPR, April 14, 2017, https://arxiv.org/pdf/1611.08050.pdf and Z. Cao et al.: "OpenPose: Realtime Multi-Person 2D Pose Estimation using Part Affinity Fields", IEEE Transactions on Pattern Analysis and Machine Intelligence, May 30, 2019, https://arxiv.org/pdf/1812.08008.pdf.

As the Neural Networks might result in the need of high computing power, the initial topology can be selected to suit a smartphone. This may be done by using the so-called "MobileNet" architecture, which is based on "Separable Convolutions". This architecture is described in A. Howard et al.: "MobileNets: Efficient Convolutional Neural Networks for Mobile Vision Applications", April 17, 2017, https://arxiv.org/pdf/1704.04861.pdf; M. Sandler et al.: "MobileNetV2: Inverted Residuals and Linear Bottlenecks", March 21, 2019, https://arxiv.org/pdf/1801.04381.pdf; A. Howard et al.: "Searching for MobileNetV3", November 20, 2019, https://arxiv.org/pdf/1905.02244.pdf.

When training the Neural Network, an Adam optimizer with a batch size between 24 and 90 might be used. The Adam optimizer is described in D. Kingma, J. Ba: "ADAM: A Method for Stochastic Optimization", conference paper at ICLR 2015, https://arxiv.org/pdf/1412.6980.pdf. For providing data augmentation, mirroring, rotations +/- xx degrees (e.g. +/- 40°) and/or scaling might be used.

During inference, a data optimizer based on the Gauß-Newton algorithm can be used. This data optimizer avoids extrapolation and smoothing of the results of the abstraction device.

The extracted characteristics (namely the skeletons) or the results output by the data optimizer can be input to the action recognition device for estimating the performed action. Actions are calculated based on snippets of time, e.g. 40 extracted characteristics generated in the most recent two seconds. The snippets can be cached in cache memory 10 and input to the action recognition device for time series analysis. A Neural Network suitable for such an analysis is described in B. Shaojie et al.: "An Empirical Evaluation of Generic Convolutional and Recurrent Networks for Sequence Modeling", April 19, 2018, https://arxiv.org/pdf/1803.01271.pdf.

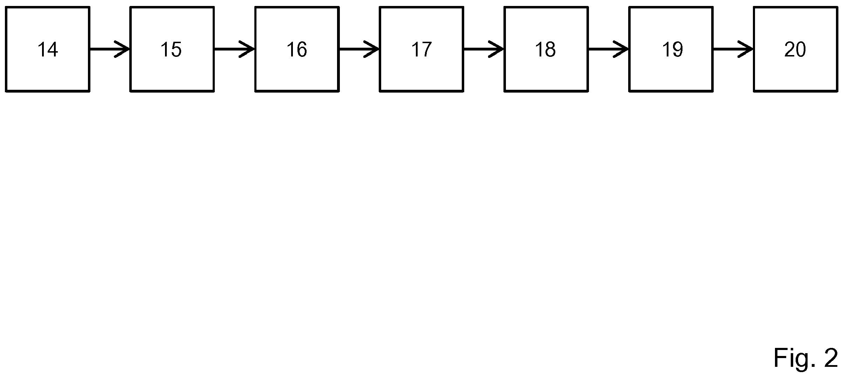

Fig. 2 shows a flow diagram of an embodiment of a method according to the present disclosure. In stage 14, storytelling content is provided to an output device 2 by the playback device 3, wherein the storytelling content includes one or more of audio data and visual data. In stage 15, the output device 2 outputs the storytelling content to the user 9. In stage 16, provision of storytelling content is interrupted. In stage 17, an action of the user 9 is captured by one or more sensors 4, 5, thereby generating measurement data. The measurement data are analyzed in stage 18 by an abstraction device 6, thereby generating extracted characteristics. In stage 19, the action recognition device 7 analyzes the time behavior of the measurement data and/or the extracted characteristics, thereby determining a recognized action. In stage 20, provision of storytelling content is continued based on the recognized action.

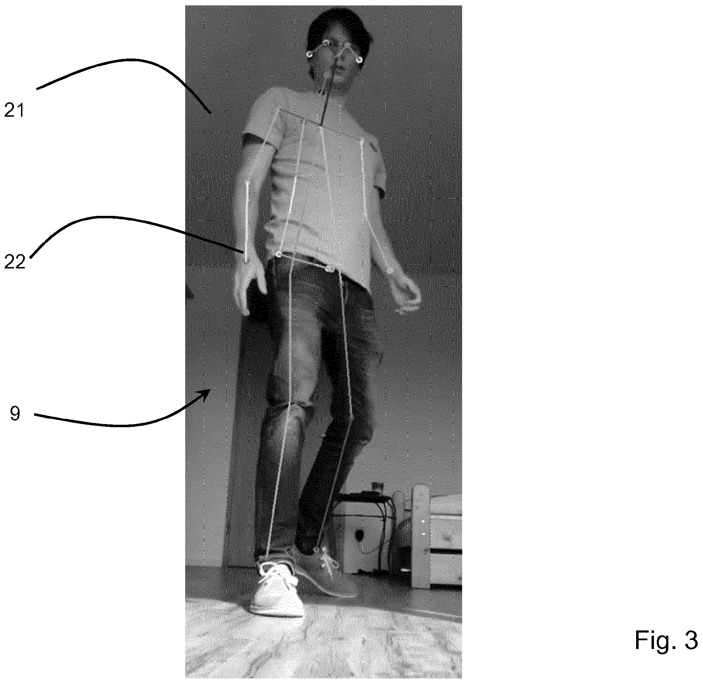

Fig. 3 shows a picture of a camera of an embodiment of the system according to the present disclosure. The picture show a user 9, that stand in front of a background 21 and performs an action. A skeleton 22 forming extracted characteristics or a model of the user 9 is overlaid in the picture.

Referring now to all figures, the system 1 can be used in different scenarios. One scenario is an audiobook with picture and video elements designed for children and supporting their need for movement. The storytelling content might refer to a well know hero of the children. When using such the system, the playback controller 3 might provide, for instance, a first storytelling phrase telling that a kitten climbed up a tree, is not able to come down again, and is very afraid of this situation. The child is asked to sing a calming song for the kitten. After telling this, the playback controller might interrupt provision of storytelling content and trigger the abstraction device and the action recognition device to determine a recognized action. Sensor 5 (a microphone) generates measurement data reflecting the utterance of the child. The abstraction device 6 analysis the measurement data and the action recognition device 7 determines, what action is performed by the captured utterance. The recognized action is compared with an anticipated action. If the action is a song and might be calming for the kitten, the next storytelling phrase might tell that the kitten starts to relax and that the child should continue a little more.

The next storytelling phrase might ask to stretch high for helping the kitten down. Sensor 4 (a camera) captures the child and provides the measurement data to the abstraction device 6 and the action recognition device 7. If the recognized action is not an anticipated action, the next storytelling phrase provided by the playback controller might ask to try it again. If the recognized action is "stretching high", the next storytelling phrase might ask for trying a little higher. If the child also performs this anticipated action, the next storytelling phrase might tell that the kitten is saved. The different steps might be illustrated by suitable animations. This short story shows how the system according to the present disclosure might operate.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: system
- 2: output device
- 3: playback controller
- 4: sensor
- 5: sensor
- 6: abstraction device
- 7: action recognition device
- 8: memory (for storytelling content)
- 9: user
- 10: cache memory
- 11: data optimizer
- 12: comparator
- 13: action memory
- 14 - 20: stages of the method
- 21: background
- 22: extracted characteristics (skeleton)

## Claims

1. System for providing interactive storytelling, comprising:
an output device (2) configured to output storytelling content to a user (9), wherein the storytelling content includes one or more of audio data and visual data,
a playback controller (3) configured to provide storytelling content to the output device (2),
one or more sensors (4, 5) configured to generate measurement data by capturing an action of the user (9),
an abstraction device (6) configured to generate extracted characteristics (22) by analyzing the measurement data,
an action recognition device (7) configured to determine a recognized action by analyzing the time behavior of the measurement data and/or the extracted characteristics (22),
wherein the playback controller (3) is additionally configured to interrupt provision of storytelling content, to trigger the abstraction device (6) and/or the action recognition device (7) to determine a recognized action, and to continue provision of storytelling content based on the recognized action.

2. System according to claim 1, additionally comprising a comparator (12) configured to determine a comparison result by comparing the recognized action with a predetermined action, wherein the comparison result is input to the playback controller (3).

3. System according to claim 1 or 2, additionally comprising a cache memory (10) configured to store measurement data and/or extracted characteristics (22) preferably for a predetermined time, wherein the action recognition device (7) preferably uses the measurement data and/or extracted characteristics stored in the cache memory (10) when analyzing the respective time behavior.

4. System according to one of claims 1 to 3, wherein the one or more sensors (4, 5) comprise one or more of a camera, a microphone, a gravity sensor, an acceleration sensor, a pressure sensor, a light intensity sensor and a magnetic field sensor.

5. System according to one of claims 1 to 4, wherein the one or more sensor (5) comprise a microphone, the measurement data comprise audio recordings, and the extracted characteristics comprise one or more of a melody, a noise, a sound and a tone.

6. System according to one of claims 1 to 5, wherein the one or more sensor (4) comprise a camera, the measurement data comprise pictures, and the extracted characteristics comprise a model of the user (9) or a model of a part of the user (9).

7. System according to one of claims 1 to 6, wherein the abstraction device and/or the action recognition device (7) comprise a Neural Network, preferably a CNN - Convolutional Neural Network -,a LTSM - Long Short Term Memory, and(or a Transformer Network.

8. System according to claim 7, wherein the Neural Networks are trained using a training optimizer, wherein the training optimizer preferably is based on a fitness criterion preferably optimized by gradient descent on an objective function, particularly preferably based on an Adam optimizer.

9. System according to one of claims 1 to 8, wherein a data optimizer (11) is connected between the abstraction device (6) and the action recognition device (7), wherein the data optimizer (11) preferably is based on energy minimization, particularly preferably on a Gauß-Newton algorithm, and wherein the data optimizer (11) preferably improves data output by the abstraction device (6).

10. System according to one of claims 1 to 9, additionally comprising a memory (8) storing data supporting the playback controller at providing storytelling content, wherein the playback controller (3) is configured to load data stored in the memory (8), and wherein the playback controller (3) is additionally configured to output loaded data to the output device (2) as storytelling content or to adapt loaded data to the recognized action.

11. System according to one of claims 1 to 10, wherein the output device (2) comprise one or more of a display, a sound generator, a vibration generator, and an optical indicator.

12. System according to one of claims 1 to 11, wherein the system (1) is optimized for being executed on a mobile device, preferably a smartphone or a tablet.

13. Method for providing interactive storytelling, preferably using a system according to one of claims 1 to 12, comprising:
providing (14), by a playback controller (3), storytelling content to an output device (2), wherein the storytelling content includes one or more of audio data and visual data,
outputting (15), by the output device (2), the storytelling content to a user (9),
interrupting (16) provision of storytelling content,
capturing (17), by one or more sensors (4, 5), an action of the user, thereby generating measurement data,
analyzing (18) the measurement data by an abstraction device (6), thereby generating extracted characteristics (22),
analyzing (19), by an action recognition device (7), the time behavior of the measurement data and/or the extracted characteristics, thereby determining a recognized action, and
continuing (20) provision of storytelling content based on the recognized action.

14. Computer program product comprising executable instructions which, when executed by a hardware processor, cause the hardware processor to execute the method according to claim 13, wherein the executable instructions are preferably optimized for being executed on a mobile device, preferably a smartphone or a tablet.

15. Computer-readable storage medium comprising executable instructions which, when executed by a hardware processor, cause the hardware processor to execute the method according to claim 13, wherein the executable instructions are preferably optimized for being executed on a mobile device, preferably a smartphone or a tablet.
